# FASCICULE DE BREVET EUROPEEN

(11) **EP 4 187 696 B1**
(45) Date de publication et mention de la délivrance du brevet: **26.03.2025**
(21) Numéro de dépôt: 22209204.1
(22) Date de dépôt: 23.11.2022
(51) Int. Cl.: H01M 50/202, H01M 50/211, H01M 50/233, H01M 50/244, H01M 50/291, H01M 50/503, H01M 50/505, H01M 50/514, H01M 50/557

(54) **MODULE DE BATTERIE À EMPILEMENT D ACCUMULATEURS À EMBALLAGE SOUPLE LOGÉS DANS DES SUPPORTS FIXÉS ENTRE EUX PAR LIAISON PAR COMPLÉMENTARITÉ DE FORMES ET SUPPORTANT DES BUSBARS IMBRIQUÉS LES UNS DANS LES AUTRES LORS DE LA LIAISON**
BATTERIEMODUL MIT EINEM STAPEL AUS FLEXIBLEN VERPACKUNGEN, DIE IN DURCH FORMSCHLÜSSIGE VERBINDUNG MITEINANDER VERBUNDEN SIND, UND DIE UNTERSTÜTZUNG VON INEINANDER VERSCHACHTELTEN BUSBARNEN
BATTERY MODULE HAVING A FLEXIBLE PACKAGING BATTERY STACK ACCOMMODATED IN FORM-FIT CARRIERS THAT ARE CONNECTED TO EACH OTHER AND SUPPORT BUSBARS NESTED IN EACH OTHER

(30) Priorité: 26.11.2021 FR 2112608
(43) Date de publication de la demande: 31.05.2023
(73) Titulaire: Commissariat à l'Energie Atomique et aux Energies Alternatives, 75015 Paris (FR)
(72) Inventeur: DEWULF, Frédéric, 38054 GRENOBLE CEDEX 09 (FR); JOST, Pierre, 38054 GRENOBLE CEDEX 09 (FR)
(74) Mandataire: Cabinet Nony

(56) Documents cités:
- EP-A1- 3 985 769
- CN-A- 105 514 330
- CN-B- 105 226 320
- FR-A1- 2 973 948
- US-A1- 2011 135 977
- US-A1- 2016 164 051

## Description

### Domaine technique

La présente invention concerne le domaine des accumulateurs électrochimiques, et plus particulièrement à des accumulateurs métal-ion.

Plus particulièrement, l'invention a trait à un module de batterie, à empilement d'accumulateurs à emballage souple.

L'invention vise en premier lieu à améliorer les assemblages par empilement d'accumulateurs souples.

Bien que décrite en référence à un accumulateur Lithium-ion, l'invention s'applique à tout accumulateur électrochimique métal-ion, c'est-à-dire également Sodium-ion, Magnésium-ion, Aluminium-ion...ou de manière plus générale à tout accumulateur électrochimique. L'invention s'applique à toute chimie d'accumulateurs métal-ion, comme par exemple NMC/Graphite, NCA/Graphite, NMC/G-Si, LFP/ Graphite, Na-ion avec électrolyte liquide ou électrolyte dit solide.

Un module de batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

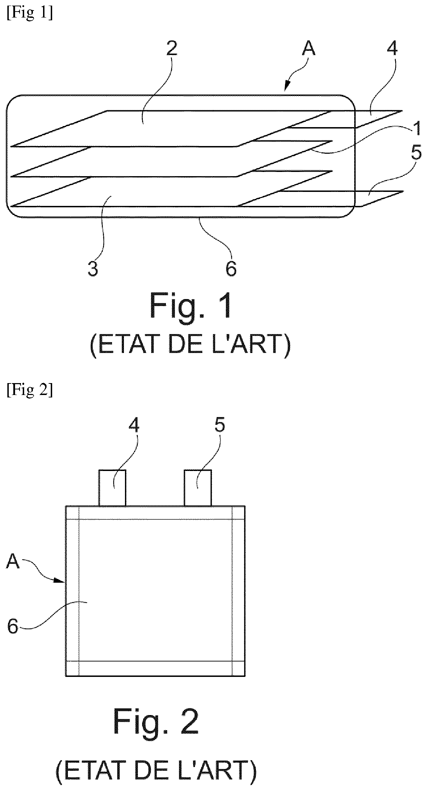

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique et la rendre étanche à l'air extérieur et à l'électrolyte à l'intérieur de la cellule, tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet US 2006/0121348,
- une géométrie prismatique, avec enroulement autour d'un axe parallélépipédique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF₆.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde de manganèse lithié, éventuellement substitué, LiMn₂O₄ ou d'oxyde de métaux de transition, comme les matériaux lamellaires par exemple, un matériau à base de LiNixMnyCozO₂ avec x+y+z = 1, tel que LiNi_{0.33}Mn_{0.33}Co_{0.33}O₂, ou un matériau à base de type oxyde de nickel cobalt aluminium LiNixCoyAlzO2 avec x+y+z = 1, tel que LiNi_{0.8}Co_{0.15}Al_{0.05}O₂.

L'électrode négative ou anode est très souvent constituée de carbone, graphite ou de Li₄TiO₅O₁₂ (matériau titanate), éventuellement peut-être à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en œuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en nickel, en cuivre nickelé ou en aluminium.

Plus précisément, l'aluminium est utilisé pour les collecteurs de courant communs à des électrodes positive et négative de titanate Li₄Ti₅O₁₂. Le cuivre est plutôt pour les électrodes négatives de graphite (Cgr), de silicium (Si) ou de composite silicium (Si-C).

Traditionnellement, une batterie ou accumulateur Li-ion utilise un couple de matériaux à l'anode et à la cathode lui permettant de fonctionner à un niveau de tension, typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages rigides (boitiers) sont usuellement fabriqués à partir d'un matériau métallique, typiquement un alliage d'aluminium ou en acier inoxydable ou d'un polymère rigide comme par exemple l'acrylonitrile butadiène styrène (ABS).

Les emballages souples, communément désignés sous la dénomination anglo-saxonne « Pouch », sont usuellement fabriqués à partir d'un matériau composite multicouche constitué d'une feuille d'aluminium recouverte par un ou plusieurs film(s) en polymère laminés par collage. Dans la plupart de ces emballages souples, le polymère recouvrant l'aluminium est choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N °ADR-0N25/AL40/CPP80.

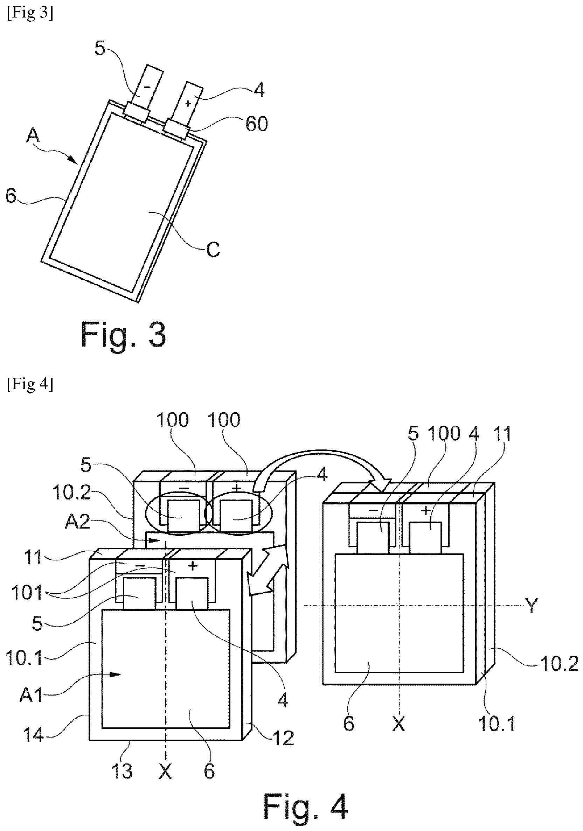

La figure 3 illustre ce type d'emballage souple 6 qui est agencé pour isoler et étanchéifier la cellule électrochimique C tout en étant traversé par une partie de deux lamelles ou languettes 4, 5, communément appelée en anglais « tab », formant les bornes ou pôles et qui s'étendent dans le plan de la cellule électrochimique. La languette 4, constituant la borne positive, se présente sous la forme d'un feuillard métallique d'épaisseur de 0,2 à 0,4 mm, le plus souvent en aluminium. La languette 5, constituant la borne négative, se présente sous la forme d'un feuillard métallique de 0,2 à 0,4 mm, le plus souvent en matériau nickel ou en cuivre ou en cuivre nickelé.

L'avantage principal des emballages souples est leur légèreté. Les accumulateurs Li-ion avec les plus grandes densités d'énergie comportent de ce fait un emballage souple.

Un accumulateur souple, communément appelé en anglais *« Thin Film Battery»,* est le plus souvent constitué d'une seule cellule électrochimique.

L'épaisseur totale de l'accumulateur avec son emballage souple est généralement inférieure à 16 mm, qui est fonction des dimensions et de la chimie des matériaux d'électrodes, et ce sans altérer les performances lors du fonctionnement de l'accumulateur.

Un pack batterie est constitué d'un nombre variable d'accumulateurs pouvant atteindre plusieurs milliers qui sont reliés électriquement en série ou en parallèle entre eux et généralement par des barres de connexion, appelées usuellement busbars.

Dans le développement et la fabrication des batteries lithium-ion, chaque profil/nouvelle demande, quels que soient les acteurs du marché, nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Il est connu, notamment pour augmenter les densités d'énergie, de réaliser des pack-batterie par empilement d'accumulateurs à emballage souple, les bornes de sortie des électrodes (languettes ou « tabs ») étant reliées électriquement en série ou en parallèle les unes avec les autres.

Par ailleurs, les accumulateurs doivent parfois être mis en compression mécanique, afin de maximiser leur durée de vie.

En effet, il est également connu qu'une bonne maitrise d'une force de compression appliquée aux cellules électrochimiques apporte un gain en durée de vie des cellules et du pack-batterie afférent.

Il est également connu qu'il existe une force de compression optimale pour les cellules permettant de maximiser leur durée de vie. Si la force de compression est réduite de 50% par rapport à la force de compression optimale, on constate généralement une hausse du vieillissement de l'ordre également de 50%.

De fait, une compression appliquée sur la plus grande surface active d'une cellule électrochimique limite la délamination de ses couches internes (électrodes, séparateur, couches actives) et donc permet un gain significatif de performances en durée de vie et en fonctionnement nominal.

Selon la forme des accumulateurs, la compression à appliquer revêt plus ou moins d'importance. Dans le cas d'accumulateur à géométrie prismatique avec un emballage souple, il s'avère que la compression peut être primordiale.

Dans le cadre de l'invention, on entend par « accumulateur de géométrie prismatique », un accumulateur de forme globalement prismatique, c'est-à-dire de forme globalement parallélépipédique, aplati selon une dimension, indépendamment de son mode de réalisation qui pourra être par enroulement d'une cellule, par empilement (« stacking »), etc.

Usuellement, la compression est appliquée au moyen de tirants mécaniques qui sont agencés autour des différents accumulateurs empilés par groupe. Le couple de serrage appliqué aux tirants détermine la force de compression appliquée sur les cellules.

Un inconvénient majeur des tirants mécaniques est qu'il est très difficile de maîtriser la force de compression au cours du fonctionnement des accumulateurs du pack-batterie, ainsi qu'au cours de leur vieillissement. En effet, lors de la charge et de la décharge des accumulateurs, et lors de leur vieillissement, ceux-ci ont tendance à subir des variations de volume par gonflement/dégonflement des cellules.

Ce phénomène de gonflement des cellules s'accentue avec leur vieillissement, ce qui entraîne une forte hausse de la force de compression à appliquer. De fait, cela dégrade la durée de vie des cellules et induit un surdimensionnement mécanique et de matière active.

Ainsi, de manière générale, usuellement, pour compenser cette dégradation prévisible, les fabricants conçoivent un pack-batterie surdimensionné pour assurer une performance déterminée en fin de vie. Par exemple, pour une performance en fin de vie d'un pack à 10Ah, typiquement au bout de 10ans, les concepteurs dimensionnent initialement un pack-batterie de 12Ah. Autrement dit, ils prévoient une marge de l'ordre de 20% pour compenser le vieillissement des cellules.

Une autre difficulté inhérente à un assemblage par empilement d'accumulateurs souples est de pouvoir assurer des liaisons électriques fiables entre les bornes d'électrodes (languettes ou « tabs ») des différents accumulateurs empilés sans trop augmenter le poids, ni la complexité de l'assemblage en lui-même

Cette difficulté est d'autant plus accrue que les bornes se présentent sous la forme de languettes flexibles, d'un feuillard métallique de très faible épaisseur, typiquement de 0,2 à 0,4mm.

Généralement, les languettes d'électrode sont connectées les unes aux autres à l'aide de fils, de plaques ou de busbars par soudage. Pour cette raison, les languettes d'électrode sont partiellement pliées, et les plaques ou les busbars sont connectées aux parties pliées des autres languettes d'électrode par soudage, ce qui peut être complexe.

De plus, les pièces connectées peuvent se séparer les unes des autres en raison d'impacts externes, ce qui peut entraîner une augmentation du nombre de produits défectueux.

Enfin, cet assemblage par soudage supprime toute possibilité de remplacer un accumulateur défectueux par un autre au sein de l'empilement ou alors au prix d'un coût déraisonnable.

Plusieurs solutions sont décrites dans la littérature pour réaliser des modules de batterie à empilement d'accumulateurs à emballage souple avec liaisons électriques entre leurs bornes ou pôles.

Le brevet US9023504B1 décrit un module de batterie avec des espaceurs agencés individuellement entre deux accumulateurs adjacents, chaque espaceur comprenant une partie de base en contact surfacique avec l'emballage souple d'un accumulateur, une partie d'aile faisant saillie de la partie de base venant recouvrir au moins partiellement les bords longitudinaux de deux accumulateurs adjacents et enfin une partie de fixation destinée à coupler mécaniquement l'espaceur à un espaceur adjacent. Un tel module présente de nombreux inconvénients. Tout d'abord, tel que dimensionné et agencé, chacun des espaceurs ne protège véritablement un accumulateur que sur une partie de son épaisseur. De plus, compte tenu de la forme de ces espaceurs, il n'y a pas de protection de la partie haute ni de la tranche en partie basse de l'accumulateur. Cela peut être très préjudiciable, sachant qu'en général, l'emballage souple d'un accumulateur est de faible épaisseur, le plus souvent inférieur à 0,2mm. D'autre part, ce brevet US9023504B1 ne prend pas en considération la liaison électrique à prévoir au niveau des languettes (bornes) de l'accumulateur. Ainsi, il n'y a ni mise en position, ni mise en pression des languettes pouvant permettre un mode de connexion électrique favorable des accumulateurs entre eux pour réaliser un assemblage en modules de batterie.

Le brevet EP1834365B1 divulgue un module de batterie à empilement d'accumulateurs à emballage souple, dont les bornes (languettes) sont mises en contact et reliées électriquement entre elles au moyen de boulons qui les traversent. Un tel module présente également de nombreux inconvénients. Il est tout d'abord nécessaire de réaliser au préalable un perçage de chacune des languettes, avec probablement un minimum de précision, ce qui n'est pas aisé compte-tenu de leur épaisseur. En outre, le contact électrique entre languettes est proportionnel à l'effort procuré par le couple de serrage d'un boulon. Ce couple est à doser précisément pour ne pas déformer chacune des plaques de fermeture en face avant et face arrière du module. Enfin, l'effort de mise en compression des languettes par ce serrage de boulons est localisé principalement dans la partie haute du module, i.e. dans la zone des connexions électriques entre languettes.

Le brevet CN105226320B décrit un module de batterie à empilement dans lequel chaque accumulateur est logé dans un support avec ses bornes (languettes) assemblées par soudage à des plots portés par le support. Les inconvénients d'un tel module sont également nombreux. A l'assemblage du module, c'est-à-dire des différents supports d'accumulateurs entre eux, on constate qu'il n'y a pas de mise en compression localisée au niveau des connexions électriques Il y a un montage avec mise en compression des différents étages constitués chacun par un support avec son accumulateur, par l'insertion de longues tiges filetées au travers de fixations de chaque support, chaque fixation étant espacée d'une pièce formant entretoise pour maintenir une épaisseur constante après serrage du module. Cet assemblage nécessite un grand nombre de référence de pièces le plus souvent métalliques qui augmentent considérablement la masse totale du module, et donc nuisent à la densité massique du module.

La demanderesse a également proposé dans la demande de brevet déposée le 15 octobre 2020 sous le n° FR2010587, un module de batterie comprenant une pluralité de supports individuels empilés les uns sur les autres et dans chacun desquels est logé un accumulateur à emballage souple, avec un assemblage mécanique des supports individuels entre eux par des moyens de clipsage/encliquetage positionnés sur les bords longitudinaux de chaque support individuel. Cette solution est intéressante dans bon nombre de configurations. Cependant, dans certaines configurations d'accumulateurs, la tenue mécanique des moyens de clipsage/encliquetage peut ne pas être suffisante ou au prix d'un surdimensionnement. Également, dans certains environnements contraignants en termes d'espace, il s'avère important de rendre apparent à minima toutes les pièces de fixation entre supports d'accumulateurs car cela peut présenter un risque d'accrochage voire de destruction par les autres pièces mécaniques autour. Or, les moyens de clipsage/encliquetage ne répondent pas à cette possibilité.

Il existe ainsi un besoin d'améliorer les modules de batterie à empilement d'accumulateurs à emballage souple, notamment afin de pallier les inconvénients précités.

Le but de l'invention est de répondre au moins en partie à ce besoin.

### Exposé de l'invention

Pour ce faire, l'invention concerne, sous l'un de ses aspects, un module de batterie comprenant :
- une pluralité d'accumulateurs, en particulier de géométrie prismatique, comprenant chacun au moins une cellule électrochimique C formée d'une cathode, d'une anode et d'un électrolyte intercalé entre la cathode et l'anode, et un emballage souple agencé pour contenir avec étanchéité la cellule électrochimique tout en étant traversé par une partie de deux languettes formant les pôles ou bornes qui s'étendent dans le plan de la cellule électrochimique;
- une pluralité de cadres borgnes, allongés selon une direction longitudinale et latérale, chaque cadre borgne formant un support avec logement d'un de la pluralité d'accumulateurs, les supports étant empilés et fixés les uns sur les autres selon une direction d'empilement orthogonale aux directions, chaque support comprenant intérieurement, le long d'un de ses bords longitudinaux et/ou latéraux, des moyens de liaison par complémentarité de formes avec au moins un support adjacent; les moyens de liaison étant agencés de sorte à ne pas faire saillie à l'extérieur de l'empilement une fois les liaisons réalisées.
- une pluralité de paires de barrettes métalliques, chaque paire de barrettes étant insérée dans un logement ménagé dans un des bords latéraux et/ou longitudinaux d'un des supports pour former une paire de cosses, une portion de chaque cosse étant en contact avec pression contre un pôle ou borne d'un des accumulateurs tandis qu'une autre portion de chaque cosse est en contact pression avec une portion de cosse adjacente au sein de l'empilement, les contacts pression au sein de l'empilement des supports étant obtenus par les liaisons par complémentarité de formes entre supports adjacents.

On rappelle ici que le sens usuel qui est celui l'invention, donné à une liaison par complémentarités de formes : les formes géométriques des pièces sont complémentaires et assurent la liaison directe entre elles.

On précise que l'expression « chaque support comprenant intérieurement » signifie la portion intérieure borgne du support.

L'expression « contact avec pression » signifie un contact mécanique avec une pression appliquée.

Avantageusement, le module est configuré de sorte que les bords longitudinaux du module forment une surface plane une fois les liaisons réalisées.

Selon un mode de réalisation avantageux, les moyens de liaison par complémentarité de formes comprennent, pour chaque support:
- une pluralité de crans répartis à distance les uns des autres le long d'au moins un des bords longitudinaux d'une des faces principales du support;
- une pluralité de créneaux répartis à distance les uns des autres le long d'au moins un des bords longitudinaux de l'autre des faces principales du support, de telle sorte qu'un coulissement longitudinal relatif entre deux supports adjacents, provoque l'engagement de chaque cran d'un bord longitudinal dans un créneau d'un bord longitudinal en définissant une position de fermeture des deux supports.

Selon ce mode et une variante de réalisation avantageuse, les moyens de liaison par complémentarité de formes comprennent, pour chaque support:
- au moins un cran agencé sur un des bords latéraux d'une des faces principales du support;
- au moins un créneau agencé sur un des bords latéraux de l'autre des faces principales du support, de telle sorte que lors du coulissement longitudinal relatif entre deux support adjacents, le cran d'un bord latéral support vient s'engager dans un créneau latéral dans la position de fermeture des deux supports.

Avantageusement, les crans et les créneaux sont configurés respectivement en tenons et mortaises de sorte à constituer des liaisons à queue d'aronde.

Avantageusement encore, les crans et les créneaux ont une section transversale en T. Selon une variante avantageuse l'autre portion de chaque cosse est emboîtée dans la portion de cosse adjacente au sein de l'empilement.

Selon cette variante avantageuse, l'autre portion de chaque cosse et la portion de cosse adjacente au sein de l'empilement étant configurées respectivement en tenon et mortaise de sorte à constituer une liaison à queue d'aronde.

De préférence, l'ensemble des cosses d'une même polarité est relié électriquement entre elles en formant un busbar.

Selon une autre variante de réalisation avantageuse, chaque cosse et/ou chaque support est(sont) configuré(e)(s) pour absorber les déplacements induits par la liaison par complémentarité de formes entre supports adjacents de sorte à garantir une pression de contact de la portion de chaque cosse contre un pôle ou borne d'un des accumulateurs et par là garantir le contact électrique permanent entre les bornes ou pôles et les cosses terminales dans l'empilement.

Pour garantir cette pression de contact, la partie du support en regard et/ou la portion de chaque cosse en contact avec un pôle ou borne d'un des accumulateurs comprennent avantageusement un ou plusieurs bossages.

Avantageusement, toutes les cosses mâle ou femelle sont identiques entre elles, et de préférence en aluminium. Proposer des cosses de même matériau, de même surface et de même forme, offre une interface externe commune pour standardiser la ou les liaisons électriques avec des busbars pour mise en série ou parallèle des cosses des supports du module de batterie selon l'invention.

L'aluminium constitue un matériau privilégié pour les cosses du module, pour les raisons suivantes :
- il présente une faible densité, typiquement une masse volumique de 2,7 g/cm³ plus faible que celle du cuivre ou du nickel, qui est 8,9 g/cm³. Cela permet un gain de masse significatif pour chaque sous-ensemble du module de batterie, constitué d'un support équipé de deux cosses ;
- il présente une très bonne conductivité électrique : à masse égale au cuivre, l'aluminium présente une conductivité électrique deux fois supérieure.
- il est facilement soudable par un procédé de soudage laser. On peut ainsi envisager d'utiliser des busbars en aluminium qui seront soudés en direct sur les cosses en aluminium du module selon l'invention en lieu et place des busbars selon l'état de l'art en cuivre, qui sont vissés sur des bornes terminales.

Pour une application Li-ion, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O₁₂, le silicium,
- le matériau d'électrode(s) positive(s) est choisi dans le groupe comportant LiFePO₄, LiCoO₂, LiNi_{0.33}Mn_{0.33}Co_{0.33}O₂.

L'invention a encore pour objet un pack-batterie comprenant au moins deux modules de batterie tels que décrits précédemment, reliés électriquement entre eux au moyen d'au moins un busbar soudé sur au moins une partie des portions de cosses, à l'extérieur de l'empilement du module.

L'invention a enfin pour objet un procédé de réalisation d'un module de batterie tel que décrit précédemment, comprenant les étapes suivantes :
i/ insertion de chaque paire de barrettes formant cosses dans les logements de chaque support, de sorte à ce qu'elle soit maintenue par ceux-ci;
ii/ logement de chaque accumulateur dans un de la pluralité des supports avec les bornes de sortie de chaque accumulateur en regard de la paire de cosse ;
iii/ empilement par coulissement relatif le long de leurs bords longitudinaux entre les supports adjacents jusqu'à réaliser les liaisons par complémentarité de formes entre eux.

Ainsi, l'invention consiste essentiellement à définir un module de batterie comprenant une pluralité de supports individuels empilés les uns sur les autres et dans chacun desquels est logé un accumulateur à emballage souple (« pouch »), chaque support logeant des barrettes métalliques formant des cosses qui viennent réaliser individuellement une liaison électrique par contact avec pression avec une borne (languette) d'un des accumulateurs.

Afin d'obtenir cette connexion électrique par contact, l'assemblage des supports individuels entre eux est réalisé mécaniquement par des moyens de liaison par complémentarités de formes positionnés le long des bords longitudinaux de chaque support individuel, ce qui permet d'obtenir une liaison mécanique robuste. Ainsi, chaque support individuel intègre par définition la fonction de fixation par serrage pour se raccorder à un autre support individuel.

La fermeture entre deux supports adjacents est ainsi obtenu par un unique mouvement de translation qui permet l'engagement des formes complémentaires entre elles.

Des moyens de blocage, également par formes complémentaires, agencés sur les bords latéraux des supports d'accumulateurs viennent verrouiller en quelque sorte la fermeture réalisée.

Avantageusement, les formes de cosses sont prévues pour qu'elles s'emboîtent l'une dans l'autre, et leur agencement est prévu pour qu'elles soient mises en contact avec les bornes de sortie des accumulateurs, simultanément au coulissement pour réaliser l' assemblage entre eux des supports. On s'affranchit ainsi de toute soudure à réaliser pour garantir les connexions électriques au sein d'un même module.

Au final, l'invention apporte de nombreux avantages parmi lesquels on peut citer:
- des liaisons électriques en sortie d'accumulateurs qui sont obtenues par contact avec pression et ne sont donc pas une liaison vissée, ou soudée comme selon l'état de l'art avec leurs inconvénients afférents comme suit ;
- une simplification de design d'un module de batterie comparativement à ceux selon l'état de l'art, avec un nombre de pièces limité. En particulier, il n'est pas besoin de rajouter des pièces de fixation, comme des tiges filetées, vis, écrou, plaque de serrage...
- la suppression d'une étape de process de soudage, par voie électrique ou soudage aux ultrasons, nécessaire dans les solutions selon l'état de l'art ;
- la possibilité d'utiliser une nature de matériau différente pour la cosse de sortie ou terminal de chaque support, par rapport à celle des languettes d'accumulateurs. L'avantage qui en découle est de standardiser toutes les cosses mises en œuvre pour le module de batterie. Cette standardisation permet notamment de souder les deux cosses en aluminium par support à un busbar suivant un même procédé d'assemblage.
- un impact favorable sur la densité d'énergie massique d'un module de batterie : le gain de masse réalisé sur l'ensemble des pièces métalliques de fixation, habituellement utilisées dans les solutions de l'état de l'art, va permettre d'améliorer la densité d'énergie massique (Wh/kg) d'une batterie ;
- du fait des liaisons électriques sans soudure entre cosses de chaque support et languettes de l'accumulateur qu'il loge, il devient plus facile de récupérer chaque accumulateur dans le cas d'une étape de démontage d'un module de batterie, pour un remplacement en cas de défectuosité ou pour le recyclage ;
- des opérations d'assemblage d'un module de batterie qui sont font en dehors de toute tension électrique.

En outre, comparativement à une solution d'encliquetage/clipsage, telle que décrite dans la demande FR2010587, les avantages majeurs sont les suivants :
- un assemblage mécanique qui peut supporter des pressions plus élevées, notamment dues aux gonflements des accumulateurs en particulier de grandes dimensions;
- une intégration complète des moyens de liaison entre supports individuels d'accumulateurs à l'intérieur de ceux-ci, ce qui rend planes les surfaces des bords longitudinaux et latéraux des modules et évite tout risque de détérioration voire de casses de ces moyens de liaison.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion de format prismatique avec son emballage souple selon l'état de l'art.
[Fig 3] la figure 3 est une vue en perspective d'un accumulateur lithium-ion de format prismatique avec son emballage souple selon l'état de l'art.
[Fig 4] la figure 4 est une vue en en perspective d'une partie d'un module de batterie selon l'invention, avant assemblage et après assemblage entre deux cadres borgnes formant des supports dans lesquels sont logés individuellement des accumulateurs.
[Fig 5] la figure 5 est une reproduction photographique montrant l'empilement et l'assemblage par liaison à complémentarités de formes d'une pluralité de supports avec les accumulateurs logés pour la réalisation d'un module de batterie selon l'invention.
[Fig 5A] la figure 5A est une vue de détail en coupe montrant une variante de réalisation de barrette métallique formant une cosse de connexion avec une languette d'accumulateur, qui est destinée à être insérée dans un support de module de batterie selon l'invention.
[Fig 6] la figure 6 est une vue en perspective montrant une face principale d'un support de module de batterie selon l'invention.
[Fig 7] la figure 7 est une vue en perspective montrant l'autre face principale d'un support de module de batterie selon l'invention.
[Fig 8] la figure 8 est une vue en coupe transversale montrant une partie des moyens de liaison à queue d'aronde entre deux supports adjacents d'un module de batterie selon l'invention.
[Fig 9] la figure 9 est une vue en coupe transversale montrant une variante de réalisation de la figure 8.
[Fig 10] la figure 10 est une vue en perspective montrant une barrette métallique formant une cosse de connexion selon la variante de réalisation de la figure 5A.
[Fig 11] la figure 11 est une vue en perspective montrant une barrette métallique formant une cosse de connexion complémentaire à celle de la figure 10.

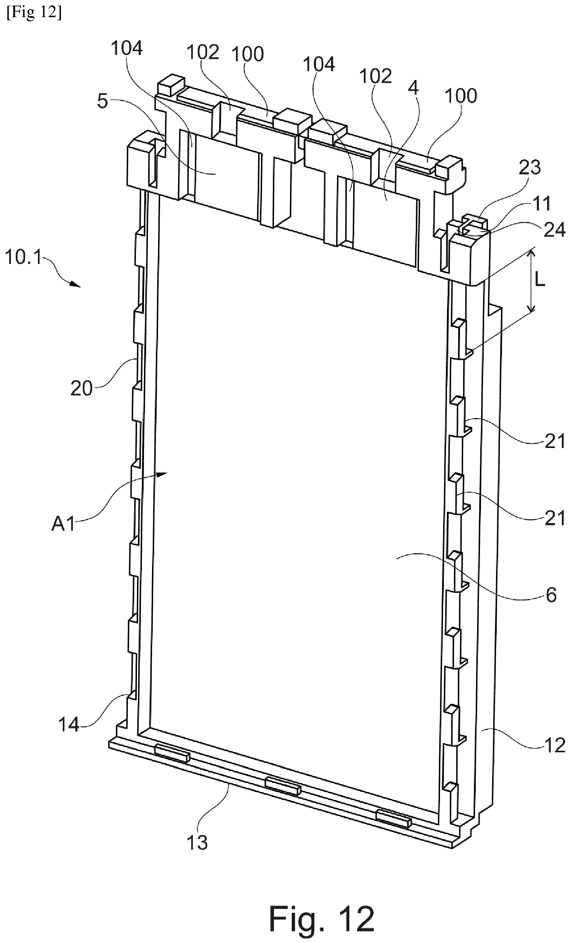

[Fig 12] la figure 12 est une vue en perspective partielle montrant l'agencement d'un accumulateur logé dans un support individuel d'un module de batterie selon l'invention.
[Fig 13] la figure 13 est une vue en perspective montrant une variante de réalisation de connexion électrique entre deux supports adjacents entre eux, avant leur assemblage .
[Fig 14A] la figure 14A est une vue en perspective montrant une étape préalable d'assemblage entre deux supports logeant des accumulateurs d'un module de batterie selon l'invention.
[Fig 14B] la figure 14B est une vue en perspective montrant l'étape préalable d'assemblage entre deux supports logeant des accumulateurs d'un module de batterie selon l'invention.
[Fig 14C] la figure 14C est une vue en perspective montrant l'étape d'assemblage entre deux supports logeant des accumulateurs d'un module de batterie selon l'invention.
[Fig 14D] la figure 14D est une vue en perspective montrant l'assemblage finalisé entre deux supports logeant des accumulateurs d'un module de batterie selon l'invention.

### Description détaillée

Les figures 1 à 3 sont relatives à des exemples différents d'accumulateur Li-ion, d'emballages souples selon l'état de l'art. Ces figures 1 à 3 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 11D.

Dans l'ensemble de la présente demande, les termes « inférieur », « supérieur », « bas », « haut », « dessous » et « dessus » sont à comprendre par référence par rapport à un module de batterie selon l'invention avec des accumulateurs Li-ion positionnés à l'horizontale.

De même, les termes « longitudinaux » et « latéraux » sont à considérer par rapport à la direction longitudinale X selon laquelle un support d'accumulateur conforme à l'invention est allongé.

Dans les exemples illustrés ci-après, les accumulateurs A1 à AN+1 illustrés sont de format prismatique, à emballage souple 6, usuellement appelés « pouch ».

Les accumulateurs A1 à AN+1 peuvent être reliés électriquement en série et/ou en parallèle dans un module selon l'invention. Le montage en série et/ou en parallèle électrique est fonction de l'orientation des accumulateurs.

On a représenté en figure 4, un exemple d'une partie de module de batterie M selon l'invention comprenant plusieurs accumulateurs adjacents A1, A2, ..AN, AN+1.

Chaque accumulateur A1, A2 ..AN, AN+1 est logé dans un cadre borgne 10.1, 10.2, ..10N, 10N+1 allongé selon une direction longitudinale (X) et selon une direction latérale (Y), qui forme ainsi un support de l'accumulateur.

Chacun des supports 10.1, 10.2 , ..10N, 10N+1 est de forme générale parallélépipédique rectangle avec deux bords latéraux 11, 13 reliés entre eux par deux bords longitudinaux 12, 14 parallèle à la direction longitudinale (X).

Les supports 10.1, 10.2 , ..10N, 10N+1 sont empilés les uns sur les autres, de préférence en étant emboités au moins partiellement les uns dans les autres, selon une direction d'empilement (Z) orthogonale aux directions (X) et (Y).

Chacun des supports 10.1, 10.2 , ..10N, 10N+1 est fixé au(x) support(s) adjacent(s) par des moyens de liaison par complémentarité de formes 2, agencés sur au moins un des bords longitudinaux 12, 14 de chaque support. Ces moyens de clipsage/encliquetage 2 permettent d'obtenir des liaisons mécaniques robustes entre les différents supports empilés.

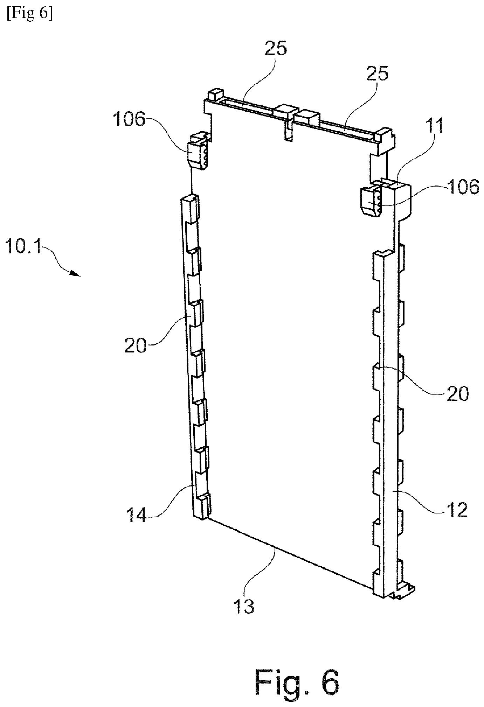

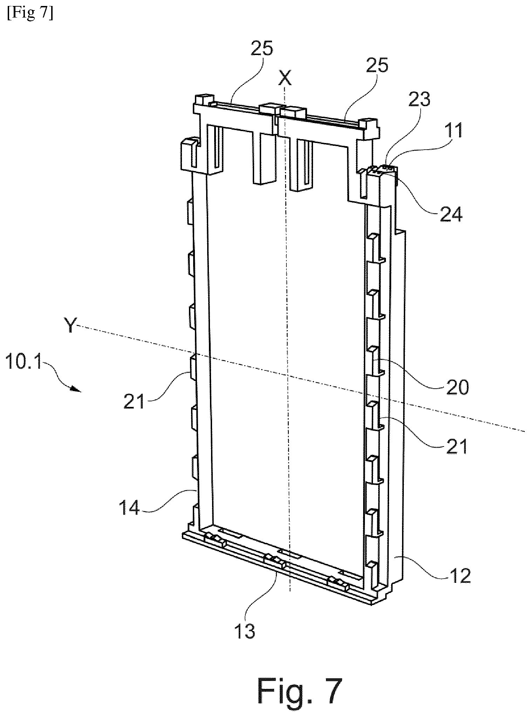

Plus précisément, comme montré aux figures 6 et 7, chaque support 10.1 intègre :
- une pluralité de crans 20 répartis à distance les uns des autres le long de chacun des bords longitudinaux 12, 14 d'une des faces principales du support;
- une pluralité de créneaux 21 répartis à distance les uns des autres le long de chacun des bords longitudinaux 12, 14 de l'autre des faces principales du support.

De préférence, ces crans 20 et ces créneaux 21 sont configurés respectivement en tenons et mortaises de sorte à constituer des liaisons à queue d'aronde.

L'agencement relatif entre les crans 20 et créneaux 21 est réalisé de telle sorte qu'un coulissement longitudinal relatif entre deux supports adjacents 10.1, 10.2 ..., provoque l'engagement de chaque cran 20 dans un créneau 21 en définissant une position de fermeture des deux supports 10.1, 10.2 ...

Autrement dit, les crans 20 de la face principale inférieure de l'accumulateur 10.2 du dessus viennent s'engager individuellement par coulissement selon l'axe longitudinal X dans les créneaux 21 de la face principale supérieure de l'accumulateur 10.1 du dessous.

Comme montré également, la construction et l'agencement relatif entre crans 20 et créneaux définit une course de coulissement L de longueur limitée par rapport à la longueur hors-tout des accumulateurs A1, A2, ...et des cadres-support 10.1, 10.2...On évite ainsi d'endommager les accumulateurs et leurs connectiques 4, 5 lors de l'assemblage du module.

Pour bloquer la fermeture entre supports 10.1, 10.2...on prévoit en outre en tant que moyens supplémentaire de liaison 2 :
- au moins un cran 23 agencé sur un des bords latéraux 11, 13 d'une des faces principales du support;
- au moins un créneau 24, sous la forme d'une rainure, agencé sur un des bords latéraux 11, 13 de l'autre des faces principales du support.

L'agencement relatif entre les crans 23 et rainures 24 est réalisé de telle sorte que lors du coulissement longitudinal relatif entre deux support adjacents 10.1, 10.2, le cran 23 vient s'engager dans une rainure 24 dans la position de fermeture des deux supports.

Autrement dit, concomitamment à la fermeture sur les bords longitudinaux 13, 14 entre supports adjacents 10.1, 10.2, le blocage de cette fermeture est réalisé par l'insertion des crans 23 dans les rainures 24.

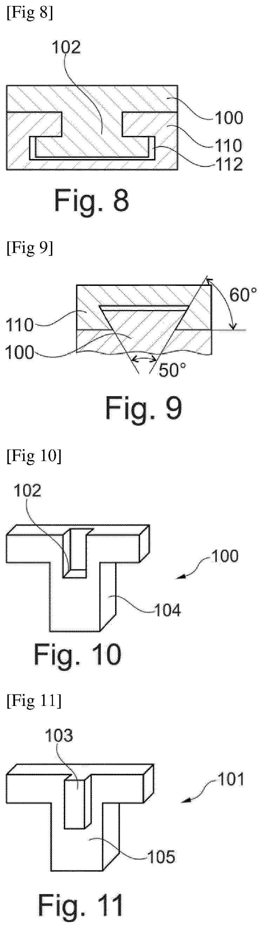

De préférence, à l'instar des crans 20 et créneaux 21, les crans 23 et rainures 24 sont configurés respectivement en tenons et mortaises de sorte à constituer des liaisons à queue d'aronde. On peut par exemple prévoir une section en T (figure 8) ou en trapèze (figure 9) pour réaliser ces liaisons à queue d'aronde.

Avantageusement, tous les moyens de liaison 20 à 24 sont agencés de sorte à ne pas faire saillie à l'extérieur de l'empilement une fois les liaisons réalisées.

Autrement dit, lorsque les liaisons par complémentarités de forme sont réalisées, tous les longitudinaux 13, 14 forment une même surface plane, lisse. Il en va de même avec les bords latéraux 11, 13.

Ainsi, une fois le module M assemblé, il n'y a pas de risque d'accrocher inopinément voire dégrader les moyens de liaison 2 car ils ne sont pas accessibles depuis l'extérieur du module.

Chacun des supports 10.1, 10.2 , ..10N, 10N+1 forme avec les moyens de liaison 2 une seule pièce monolithique en matériau plastique isolant électrique. Un support peut par exemple être en polyétherimide (PEI), en acrylonitrile butadiène styrène (ABS), en polyamide (PA) ou en acide polylactique (PLA). Le procédé de réalisation privilégié est l'impression 3D. Les matériaux imprimables par 3D sont généralement de type : PLA, ABS, PA12, etc...Il est cependant tout à fait possible de réaliser ces pièces par usinage, et les matériaux utilisés seraient de type : POM C, Delrin (POM), FR4, PEEK, etc...

Pour assurer les liaisons électriques entre les différents accumulateurs A1- AN+1 d'un même module de batterie M, chaque support 10.1, 10.2, ..10N, 10N+1 comporte une paire de fentes 25 dans chacune desquelles vient s'insérer une barrette métallique 100, 101 pour former une paire de cosses que l'on peut également désigner comme cosses terminales ou de sortie. Dans l'empilement du module M, une portion de chaque cosse 100 est en contact avec pression contre un pôle ou borne 4, 5 d'un des accumulateurs A1 à AN+1. Une autre portion de chaque cosse 100 est en contact avec pression contre une portion de cosse adjacent. Ainsi, la continuité électrique est assurée entre tous les accumulateurs A1 à AN+1. Avantageusement, toutes les cosses 100 ou 101 sont identiques entre elles au sein d'un même module de batterie, c'est-à-dire de mêmes dimensions et réalisées dans le même matériau. De préférence, ces cosses sont en aluminium.

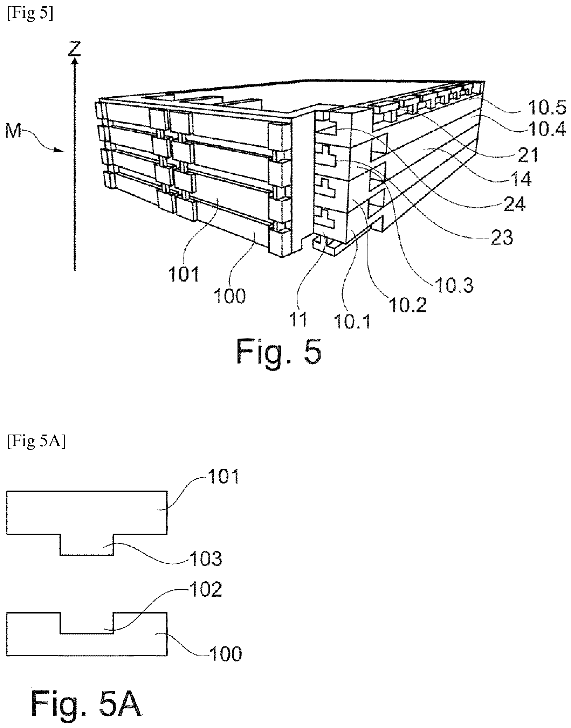

Selon une variante avantageuse de réalisation montrée aux figures 5A, 10 et 11, on prévoit de réaliser des cosses mâle et femelle 100,101 de formes complémentaires et d'agencer une paire par exemple mâle dans un support 10.2 d'accumulateur du dessus et une paire femelle dans le support 10.1 d'accumulateur adjacent du dessous.

Ainsi, une cosse femelle 100 comprend une rainure 102 et une portion 104 de contact avec une languette 4 ou 5 d'accumulateur.

Une cosse mâle 101 comprend quant à elle une nervure 103 de formes complémentaires avec une rainure 102 et également une portion 105 de contact avec une languette 4 ou 5 d'accumulateur.

L'emboitement d'une cosse mâle 101 d'un support 10.2 dans une cosse femelle 100 d'un support 10.2 adjacent se fait avantageusement simultanément au coulissement relatif entre les deux supports 10.1, 10.2 pour réaliser la fermeture entre eux. De façon alternative, les cosses peuvent combiner les deux caractéristiques male-femelle en ayant sur des faces opposés d' une même cosse les formes 102 et 103. La face portant forme 102 pouvant ainsi coopérer avec un support adjacent portant la forme 103, et de l'autre côté la face portant forme 103 peut coopérer avec un support adjacent portant la forme 102.

Ainsi, par empilement avec coulissements successifs des différents supports 10.1, ...10.n d'un même module M de batterie, on forme des busbars de connexion par emboitements successifs des cosses mâle et femelle.

Ainsi, aucune soudure entre cosses 100, 101 d'une même polarité n'est à réaliser dans un module M donné.

Afin de garantir une pression mécanique suffisante entre les portions 104, 105 de contact des cosses 100, 101 avec les languettes 4 ou 5 des accumulateurs logés A1, A2...dans les supports 10.1, 10.2..on prévoit avantageusement de réaliser des bossages qui vont venir appliquer une pression supplémentaire lors de la fermeture des supports par coulissement.

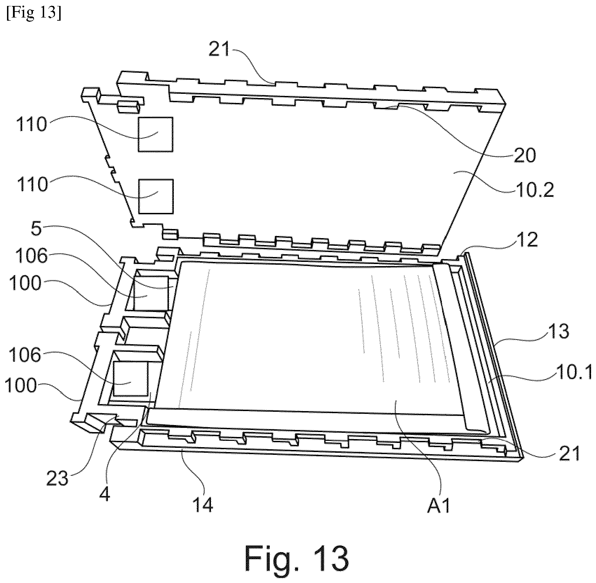

Comme montré schématiquement en figure 13, ces bossages 106, 110 peuvent être réalisés directement sur les portions 104,105 de contact des cosses 100, 101 et/ou directement formés dans la partie du support 10.1, 10.2 en regard des portions 104, 105.

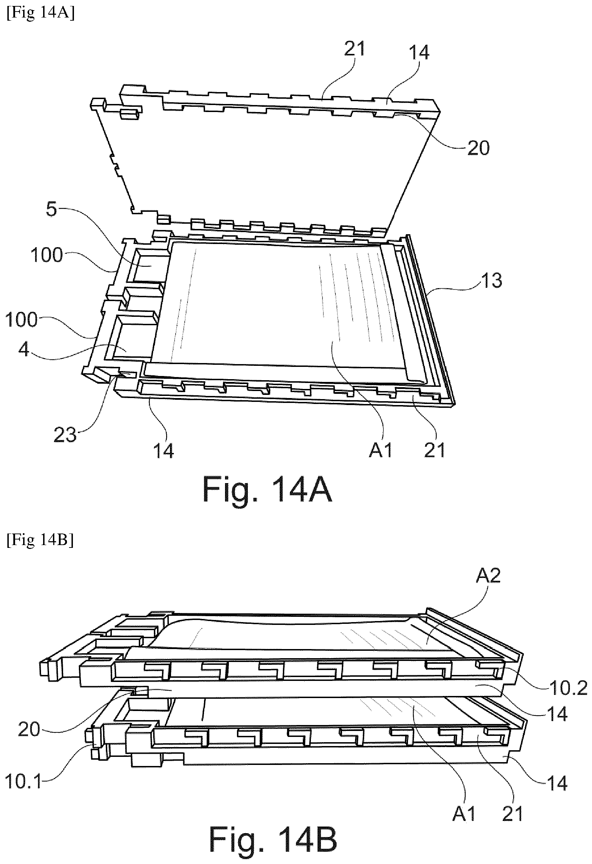

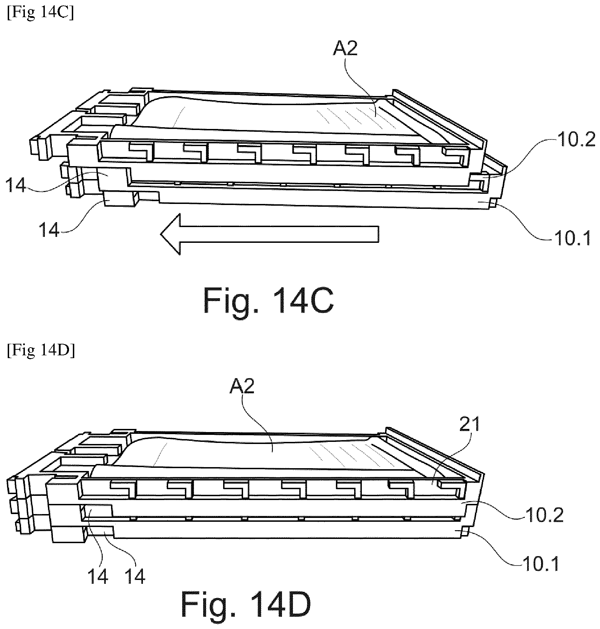

On récapitule maintenant en référence aux figures 14A à 14D l'assemblage par complémentarités de formes entre supports adjacents afin de constituer un module de batterie selon l'invention.

Etape i/ : on insère une paire de barrettes formant cosses 100 ou 101 dans les fentes 25 de chaque support 10.1, 10.2 prévues à cet effet, de sorte à ce que ces cosses 100, 101 soient maintenues.

Etape ii/ : on vient loger chaque accumulateur A1, A2,... dans un support donné 10.1, 10.2... en positionnant les bornes de sortie (languettes) 4, 5 de chaque accumulateur en regard de la paire de cosse 100 ou 101 (figure 14A).

Etape iii/ : on procède alors à l'empilement par coulissement relatif le long de leurs bords longitudinaux 12, 14 entre les supports adjacents 10.1, 10.2... jusqu'à réaliser les liaisons par complémentarité de formes entre eux.

Plus précisément, on amène un support 10.2 en regard d'un support adjacent 10.1 (figures 14A, 14B) puis on vient les faire coulisser relativement l'un par rapport à l'autre de sorte que les crans 20 s'engagent dans les créneaux 21 selon la course de translation prédéfinie L. Les supports 10.1, 10.2 sont ainsi fermés et leurs bords longitudinaux 13 ou 14 forment une seule surface plane.

Simultanément, les crans 23 s'engagent dans les rainures 24 et bloquent ainsi la fermeture entre supports adjacents 10.1, 10.2...

Simultanément également, les cosses mâles 101 viennent s'emboîter dans les cosses femelles 100. A l'intérieur des supports 10.1, 10.2, la fermeture par coulissement entre supports a provoqué la mise en contact avec pression, éventuellement augmentée par les bossages 106, 110 prévus à cet effet, entre les portions 104, 105 des cosses 100, 101 et les languettes 4, 5 formant les bornes de sortie.

L'invention n'est pas limitée aux exemples qui viennent d'être décrits.

D'autres variantes et améliorations peuvent être envisagées sans pour autant sortir du cadre de l'inventior, tel que défini dans les revendications.

Si dans l'ensemble des exemples illustrés, les emballages souples des accumulateurs conformes à l'invention sont de format prismatique, l'invention s'applique bien entendu à tous les accumulateurs à emballage souple.

Un module de batterie M selon l'invention peut comprendre un nombre d'accumulateurs et de supports afférents empilés, qui est déterminé en fonction de chaque application.

## Revendications

1. Module de batterie (M) comprenant :
- une pluralité d'accumulateurs, en particulier de géométrie prismatique (A1, A2...AN+1) comprenant chacun au moins une cellule électrochimique C formée d'une cathode (2), d'une anode (3) et d'un électrolyte intercalé entre la cathode et l'anode, et un emballage (6) souple agencé pour contenir avec étanchéité la cellule électrochimique tout en étant traversé par une partie de deux languettes (4, 5), formant les pôles ou bornes qui s'étendent dans le plan de la cellule électrochimique;
- une pluralité de cadres borgnes (10.1, 10.2...10.N+1), allongés selon une direction longitudinale (X) et latérale (Y), chaque cadre borgne formant un support avec logement d'un de la pluralité d'accumulateurs, les supports étant empilés et fixés les uns sur les autres selon une direction d'empilement (Z) orthogonale aux directions (X,Y), chaque support comprenant intérieurement, le long d'un de ses bords longitudinaux (12,14) et/ou latéraux (11, 13), des moyens de liaison par complémentarité de formes avec au moins un support adjacent; les moyens de liaison étant agencés de sorte à ne pas faire saillie à l'extérieur de l'empilement une fois les liaisons réalisées ;
- une pluralité de paires de barrettes métalliques (100), chaque paire de barrettes étant insérée dans un logement ménagé dans un des bords latéraux (11, 13) et/ou longitudinaux (12, 14) d'un des supports pour former une paire de cosses, une portion (104, 105) de chaque cosse étant en contact avec pression contre un pôle ou borne d'un des accumulateurs tandis qu'une autre portion (102) de chaque cosse est en contact pression avec une portion de cosse adjacente (103) au sein de l'empilement, les contacts pression au sein de l'empilement des supports étant obtenus par les liaisons par complémentarité de formes entre supports adjacents.

2. Module de batterie (M) selon la revendication 1, le module étant configuré de sorte que les bords longitudinaux (12, 14) du module forment une surface plane une fois les liaisons réalisées.

3. Module de batterie (M) selon la revendication 1 ou 2, les moyens de liaison (20) par complémentarité de formes comprenant, pour chaque support:
- une pluralité de crans (20, 23) répartis à distance les uns des autres le long d'au moins un des bords longitudinaux d'une des faces principales du support;
- une pluralité de créneaux (21, 24) répartis à distance les uns des autres le long d'au moins un des bords longitudinaux de l'autre des faces principales du support, de telle sorte qu'un coulissement longitudinal relatif entre deux supports adjacents, provoque l'engagement de chaque cran d'un bord longitudinal dans un créneau d'un bord longitudinal en définissant une position de fermeture des deux supports.

4. Module de batterie (M) selon la revendication 3, les moyens de liaison (20) par complémentarité de formes comprenant, pour chaque support:
- au moins un cran (20, 23) agencé sur un des bords latéraux d'une des faces principales du support;
- au moins un créneau (21, 24) agencé sur un des bords latéraux de l'autre des faces principales du support, de telle sorte que lors du coulissement longitudinal relatif entre deux support adjacents, le cran d'un bord latéral support vient s'engager dans un créneau latéral dans la position de fermeture des deux supports.

5. Module de batterie (M) selon l'une des revendications 3 ou 4, les crans et les créneaux étant configurées respectivement en tenons et mortaises de sorte à constituer des liaisons à queue d'aronde.

6. Module de batterie (M) selon la revendication 5, les crans et les créneaux ayant une section transversale en T.

7. Module de batterie (M) selon l'une des revendications précédentes, l'autre portion (102) de chaque cosse étant emboîtée dans la portion de cosse adjacente (103) au sein de l'empilement.

8. Module de batterie (M) selon la revendication 7, l'autre portion (102) de chaque cosse et la portion de cosse adjacente (103) au sein de l'empilement étant configurés respectivement en tenon et mortaise de sorte à constituer une liaison à queue d'aronde.

9. Module de batterie (M) selon l'une des revendications précédentes, l'ensemble des cosses d'une même polarité étant relié électriquement entre elles en formant un busbar.

10. Module de batterie (M) selon l'une des revendications précédentes, chaque cosse et/ou chaque support étant configuré(e) pour absorber les déplacements induits par la liaison par complémentarité de formes entre supports adjacents de sorte à garantir une pression de contact de la portion de chaque cosse contre un pôle ou borne d'un des accumulateurs et par là garantir le contact électrique permanent entre les bornes ou pôles et les cosses terminales dans l'empilement.

11. Module de batterie (M) selon la revendication 10, la partie du support en regard et/ou la portion de chaque cosse en contact avec un pôle ou borne d'un des accumulateurs comprenant un ou plusieurs bossages (106, 110).

12. Module de batterie (M) selon l'une des revendications précédentes, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O₁₂, le silicium;
- le matériau d'électrode(s) positive(s) est choisi dans le groupe comportant LiFePO₄, LiCoO₂, LiNi_{0.33}Mn_{0.33}Co_{0.33}O₂.

13. Pack-batterie comprenant au moins deux modules de batterie (M) selon l'une des revendications précédentes reliés électriquement entre eux au moyen d'au moins un busbar soudé sur au moins une partie des portions de cosses, à l'extérieur de l'empilement du module.

14. Procédé de réalisation d'un module de batterie (M) selon l'une des revendications 2 à 12, comprenant les étapes suivantes :
i/ insertion de chaque paire de barrettes formant cosses dans les logements de chaque support, de sorte à ce qu'elle soit maintenue par ceux-ci;
ii/ logement de chaque accumulateur dans un de la pluralité des supports avec les bornes de sortie de chaque accumulateur en regard de la paire de cosse ;
iii/ empilement par coulissement relatif le long de leurs bords longitudinaux entre les supports adjacents jusqu'à réaliser les liaisons par complémentarité de formes entre eux.

## Patentansprüche

1. Batteriemodul (M), das Folgendes aufweist:
- eine Vielzahl von Akkumulatoren, insbesondere mit prismatischer Geometrie (A1, A2...AN+1), die jeweils mindestens eine elektrochemische Zelle C, die aus einer Kathode (2), einer Anode (3) und einem zwischen der Kathode und der Anode angeordneten Elektrolyten gebildet ist, und eine flexible Verpackung (6) aufweisen, die so beschaffen ist, dass sie die elektrochemische Zelle dicht umschließt, während sie von einem Teil von zwei Zungen (4, 5) durchquert wird, die die Pole oder Klemmen bilden, die sich in der Ebene der elektrochemischen Zelle erstrecken;
- eine Vielzahl von Blindrahmen (10.1, 10.2...10.N+1), die sich in einer Längsrichtung (X) und einer Querrichtung (Y) erstrecken, wobei jeder Blindrahmen einen Träger mit Aufnahme für einen aus der Vielzahl der Akkumulatoren bildet, wobei die Träger in einer Stapelrichtung (Z) orthogonal zu den Richtungen (X, Y) gestapelt und aneinander befestigt sind, wobei jeder Träger innen entlang einem seiner Längskanten (12, 14) und/oder Querkanten (11, 13) Mittel zur formschlüssigen Verbindung mit mindestens einem benachbarten Träger aufweist; wobei die Verbindungsmittel so angeordnet sind, dass sie nicht aus dem Stapel herausragen, sobald die Verbindungen hergestellt sind;
- eine Vielzahl von Metallleistenpaaren (100), wobei jedes Leistenpaar in eine Aufnahme in einer der Querkanten (11, 13) und/oder Längskanten (12, 14) eines der Träger eingesetzt ist, um ein Paar von Kabelschuhen zu bilden, wobei ein Abschnitt (104, 105) jedes Kabelschuhs in Druckkontakt mit einem Pol oder einer Klemme einer der Akkumulatoren steht, während ein anderer Abschnitt (102) jedes Kabelschuhs in Druckkontakt mit einem benachbarten Kabelschuhabschnitt (103) innerhalb des Stapels steht, wobei die Druckkontakte innerhalb des Stapels der Träger durch die formschlüssigen Verbindungen zwischen benachbarten Trägern erhalten werden.

2. Batteriemodul (M) nach Anspruch 1, wobei das Modul so konfiguriert ist, dass die Längskanten (12, 14) des Moduls eine ebene Fläche bilden, sobald die Verbindungen hergestellt sind.

3. Batteriemodul (M) nach Anspruch 1 oder 2, wobei die formschlüssigen Verbindungsmittel (20) für jeden Träger Folgendes aufweisen:
- eine Vielzahl von Rasten (20, 23), die mit Abstand voneinander entlang mindestens einer der Längskanten einer der Hauptflächen des Trägers verteilt sind;
- eine Vielzahl von Lücken (21, 24), die mit Abstand voneinander entlang mindestens einer der Längskanten der anderen der Hauptflächen des Trägers verteilt sind, so dass eine relative Längsverschiebung zwischen zwei benachbarten Trägern bewirkt, dass jede Raste einer Längskante in eine Lücke einer Längskante eingreift, wodurch eine geschlossene Position der beiden Träger definiert wird.

4. Batteriemodul (M) nach Anspruch 3, wobei die formschlüssigen Verbindungsmittel (20) für jeden Träger Folgendes aufweisen:
- mindestens eine Raste (20, 23), die an einer der Seitenkanten einer der Hauptflächen des Trägers angeordnet ist;
- mindestens eine Lücke (21, 24), der an einer der Seitenkanten der anderen der Hauptflächen des Trägers angeordnet ist, so dass bei der relativen Längsverschiebung zwischen zwei benachbarten Trägern die Raste einer Querkante des Trägers in der geschlossenen Position der beiden Träger in einen Querlücke eingreift.

5. Batteriemodul (M) nach einem der Ansprüche 3 oder 4, wobei die Rasten und Lücken jeweils als Zapfen und Zapfenlöcher ausgebildet sind, so dass sie Schwalbenschwanzverbindungen bilden.

6. Batteriemodul (M) nach Anspruch 5, wobei die Rasten und Lücken einen T-förmigen Querschnitt aufweisen.

7. Batteriemodul (M) nach einem der vorhergehenden Ansprüche, wobei der andere Abschnitt (102) jedes Kabelschuhs in den benachbarten Kabelschuhabschnitt (103) innerhalb des Stapels eingeschachtelt ist.

8. Batteriemodul (M) nach Anspruch 7, wobei der andere Abschnitt (102) jedes Kabelschuhs und der benachbarte Kabelschuhabschnitt (103) innerhalb des Stapels jeweils als Zapfen und Zapfenloch ausgebildet sind, um eine Schwalbenschwanzverbindung zu bilden.

9. Batteriemodul (M) nach einem der vorhergehenden Ansprüche, wobei die Gesamtheit der Kabelschuhe derselben Polarität elektrisch miteinander verbunden ist und eine Sammelschiene bildet.

10. Batteriemodul (M) nach einem der vorhergehenden Ansprüche, wobei jeder Kabelschuh und/oder jeder Träger so konfiguriert ist, dass er die durch die formschlüssige Verbindung zwischen benachbarten Trägern induzierten Verschiebungen aufnimmt, so dass ein Kontaktdruck des Abschnitts jedes Kabelschuhs gegen einen Pol oder eine Klemme einer der Akkumulatoren und damit ein permanenter elektrischer Kontakt zwischen den Klemmen oder Polen und den Endkabelschuhen im Stapel gewährleistet ist.

11. Batteriemodul (M) nach Anspruch 10, wobei der gegenüberliegende Teil des Trägers und/oder der Abschnitt jedes Kabelschuhs, der mit einem Pol oder einer Klemme einer der Akkumulatoren in Kontakt steht, einen oder mehrere Erhebungen (106, 110) aufweist.

12. Batteriemodul (M) nach einem der vorhergehenden Ansprüche, wobei jeder Akkumulator ein Li-Ionen-Akku ist, wobei:
- das Material der negativen Elektrode(n) aus der Gruppe ausgewählt ist, die aus Graphit, Lithium, Titanatoxid Li₄TiO₅O₁₂, Silizium besteht;
- das Material der positiven Elektrode(n) aus der Gruppe ausgewählt ist, die aus LiFePO₄, LiCoO₂, LiNi_{0.33}Mn_{0.33}Co_{0.33}O₂ besteht.

13. Batteriepack mit mindestens zwei Batteriemodulen (M) nach einem der vorhergehenden Ansprüche, die mittels mindestens einer Sammelschiene elektrisch miteinander verbunden sind, die an mindestens einen Teil der Kabelschuhabschnitte außerhalb des Stapels des Moduls angelötet ist.

14. Verfahren zur Herstellung eines Batteriemoduls (M) nach einem der Ansprüche 2 bis 12, das die folgenden Schritte aufweist:
i/ Einsetzen jedes Paares kabelschuhbildender Leisten in die Aufnahmen jeder Halterung, so dass sie von diesen gehalten werden;
ii/ Aufnehmen jedes Akkumulators in einen der Vielzahl von Trägern, wobei die Ausgangsanschlüsse jedes Akkumulators dem Kabelschuhpaar zugewandt sind;
iii/ Stapeln durch relatives Verschieben entlang ihrer Längskanten zwischen benachbarten Trägern, bis die formschlüssigen Verbindungen zwischen ihnen hergestellt sind.

## Claims

1. Battery module (M), comprising:
- a plurality of accumulators, in particular of prismatic geometry (A1, A2...AN+1), each comprising at least one electrochemical cell C formed by a cathode (2), an anode (3) and an electrolyte interposed between the cathode and the anode, and a flexible package (6) arranged to contain the electrochemical cell in a sealed manner while having passing through it a portion of two tabs (4, 5) that form the poles or terminals which extend in the plane of the electrochemical cell;
- a plurality of blind frames (10.1, 10.2...10.N+1) that are elongate in a longitudinal direction (X) and lateral direction (Y), each blind frame forming a support with housing for one of the plurality of accumulators, the supports being stacked and fixed to one another in a stacking direction (Z) orthogonal to the directions (X,Y), each support internally comprising, along one of its longitudinal edges (12, 14) and/or lateral edges (11, 13), connecting means for interlocking with at least one adjacent support through complementing shapes; the connecting means being arranged so as not to project outside the stack once the interlocking connections have been made;
- a plurality of pairs of metal strips (100), each pair of strips being inserted into a housing formed in one of the lateral edges (11, 13) and/or longitudinal edges (12, 14) of one of the supports to form a pair of lugs, one portion (104, 105) of each lug being in pressing contact with a pole or terminal of one of the accumulators while another portion (102) of each lug is in pressing contact with an adjacent lug portion (103) within the stack, the pressing contacts within the stack of supports being obtained by the interlocking connections of adjacent supports through complementing shapes.

2. Battery module (M) according to Claim 1, the module being configured such that the longitudinal edges (12, 14) of the module form a flat surface after the interlocking connections have been made.

3. Battery module (M) according to Claim 1 or 2, the connecting means (20) for interlocking through complementing shapes comprising, for each support:
- a plurality of crenellation teeth (20, 23) spaced apart along at least one of the longitudinal edges of one of the main faces of the support;
- a plurality of crenellation slots (21, 24) spaced apart along at least one of the longitudinal edges of the other of the main faces of the support, so that longitudinal sliding of two adjacent supports relative to one another causes each crenellation tooth of a longitudinal edge to engage in a crenellation slot of a longitudinal edge, thereby defining a closed position of the two supports.

4. Battery module (M) according to Claim 3, the connecting means (20) for interlocking through complementing shapes comprising, for each support:
- at least one crenellation tooth (20, 23) arranged on one of the lateral edges of one of the main faces of the support;
- at least one crenellation slot (21, 24) arranged on one of the lateral edges of the other of the main faces of the support, in such a way that, during longitudinal sliding of two adjacent supports relative to one another, the crenellation tooth of a support lateral edge engages in a lateral crenellation slot with the two supports in the closed position.

5. Battery module (M) according to one of Claims 3 and 4, the crenellation teeth and the crenellation slots being configured as tenons and as mortises, respectively, so as to form dovetail connections.

6. Battery module (M) according to Claim 5, the crenellation teeth and the crenellation slots having a T-shaped cross section.

7. Battery module (M) according to one of the preceding claims, the other portion (102) of each lug being nested into the adjacent lug portion (103) within the stack.

8. Battery module (M) according to Claim 7, the other portion (102) of each lug and the adjacent lug portion (103) within the stack being configured as a tenon and as a mortise, respectively, so as to form a dovetail connection.

9. Battery module (M) according to one of the preceding claims, all of the lugs of the same polarity being electrically connected to one another to form a busbar.

10. Battery module (M) according to one of the preceding claims, each lug and/or each support being configured to absorb the displacements induced by the interlocking connection of adjacent supports through complementing shapes so as to guarantee a pressing contact of the portion of each lug against a pole or terminal of one of the accumulators and thereby guarantee permanent electrical contact between the terminals or poles and the terminal lugs in the stack.

11. Battery module (M) according to Claim 10, the part of the support facing and/or the portion of each lug in contact with a pole or terminal of one of the accumulators comprising one or more bosses (106, 110).

12. Battery module (M) according to one of the preceding claims, each accumulator being an Li-ion accumulator in which:
- the material of the negative electrode(s) is selected from the group comprising graphite, lithium, the titanate oxide Li₄TiO₅O₁₂ and silicon;
- the material of the positive electrode(s) is selected from the group comprising LiFePO₄, LiCoO₂ and LiNi_{0.33}Mn_{0.33}Co_{0.33}O₂.

13. Battery pack comprising at least two battery modules (M) according to one of the preceding claims electrically connected to one another by means of at least one busbar welded to at least part of the lug portions, outside the stack of the module.

14. Method for manufacturing a battery module (M) according to one of Claims 2 to 12, comprising the following steps:
i/ inserting each pair of lug-forming strips into the housings of each support so that it is held thereby;
ii/ housing each accumulator in one of the plurality of supports with the output terminals of each accumulator facing the pair of lugs;
iii/ stacking the adjacent supports by sliding along their longitudinal edges relative to one another until the interlocking connections through complementing shapes are made.
